# EUROPEAN PATENT SPECIFICATION

(11) **EP 3 513 645 B1**
(45) Date of publication and mention of the grant of the patent: **03.06.2020**
(21) Application number: 18212566.6
(22) Date of filing: 14.12.2018
(51) Int. Cl.: A01D 34/64, A01D 34/82

(54) **A CUTTING PLATE WITH A SAFETY DEVICE FOR LOCKING THE CUTTING BLADE**
SCHNEIDPLATTE MIT EINER SICHERHEITSVORRICHTUNG ZUM VERRIEGELN DER SCHNEIDKLINGE
PLAQUE DE DÉCOUPE COMPORTANT UN DISPOSITIF DE SÉCURITÉ POUR VERROUILLER LA LAME COUPANTE

(30) Priority: 27.12.2017 IT 201700149736
(43) Date of publication of application: 24.07.2019
(73) Proprietor: Stiga S.p.A. in breve anche St. S.p.A., 31033 Castelfranco Veneto (TV) (IT)
(72) Inventor: SOLIGO, Andrea, 31033 San Floriano Di Castelfranco Veneto (TV) (IT); SUSIN, Eddi, 31050 Vedelago (TV) (IT); BASTASIN, Franco, 31100 Treviso (IT)
(74) Representative: Mittler, Andrea

(56) References cited:
- EP-A1- 1 654 921
- EP-A1- 2 281 429
- EP-A1- 2 649 871
- US-A- 3 169 358
- US-A- 3 628 315

## Description

The present invention relates to a cutting plate with a safety device for locking the cutting blade.

Lawn tractors comprising a cutting plate separably associated with the front part of the tractor are known. This allows different types of cutting plates to be associated with the same tractor according to the needs, e.g. a cutting plate with several cutting blades connected by transmission belts.

After several work sessions, the need arises to clean the cutting area without separating the cutting plate from the tractor.

The lifting plate is normally lifted, by gripping it at the front part thereof, causing a rotation of 40°-60° so as to make the cutting area accessible while keeping the tractor still with the wheels resting on the ground.

Systems allowing the cutting plate to be kept in a raised and inclined position are known.

The problem of preventing the accidental start of the cutting blade occurs when the cutting blade is in a raised position, i.e. in a washing position.

The mainly adopted solution consists in removing the driving belt manually.

EP-2649871 describes a lawnmower with an inclinable cutting plate in a washing position, comprising a mechanism for locking the plate in an inclined position and which can be operated by the operator.

US-2016/0050847 shows a lawnmower with an inclinable cutting plate comprising a device which allows the plate to be lifted without removing the belt.

EP-1654921 describes a cutting plate for a tractor. Said cutting plate comprises a lever, which is rotatably associated with a frame of the cutting plate and separably associated with the tractor.

Disadvantageously, said devices do not allow the rotation of the cutting blade to be prevented except by removing the transmission belt.

It is an object of the present invention to manufacture an inclinable cutting plate which is separably associable with a tractor, comprising a safety device which allows the cutting blade to be locked when lifting the cutting plate.

It is a further object of the present invention that said safety device is automatically operated when lifting the cutting plate.

It is a yet further object of the present invention that said safety device is simple to be manufactured and does not require modifications of the kinematic mechanism which allows the rotation of the cutting blade.

According to the invention, said and further objects are achieved by a cutting plate as defined in claim 1.

Advantageously, the weight of the cutting plate is used during the lowering step in order to overcome the force of the engagement of the body with the rotor.

The operator is thus able to move the cutting plate between the working position and the washing position with two simple movements, lifting and lowering.

In the washing position, there is no risk for the operator because the rotor is locked without removing the driving belt.

These and other features of the present invention will become more apparent from the following detailed description of a practical embodiment thereof, shown by way of a non-limiting example in the accompanying drawings, in which:
figure 1 shows a side view of a cutting plate in a lowered working position;
figure 2 shows a side view of the cutting plate in a raised washing position;
figure 3 shows a top plan view of the cutting plate in a lowered position;
figure 4 shows a section view according to line IV-IV of figure 2;
figure 5 shows a section view according to line V-V of figure 3;
figure 6 shows a section view according to line VI-VI of figure 3;
figure 7 shows a side view of a lawnmower with the cutting plate in a lowered position;
figure 8 shows a side view of the lawnmower with the cutting plate in a raised position;
figure 9 shows a front side view of the lawnmower with the cutting plate in a lowered position;
figure 10 shows a front view of the lawnmower with the cutting plate in a raised position.

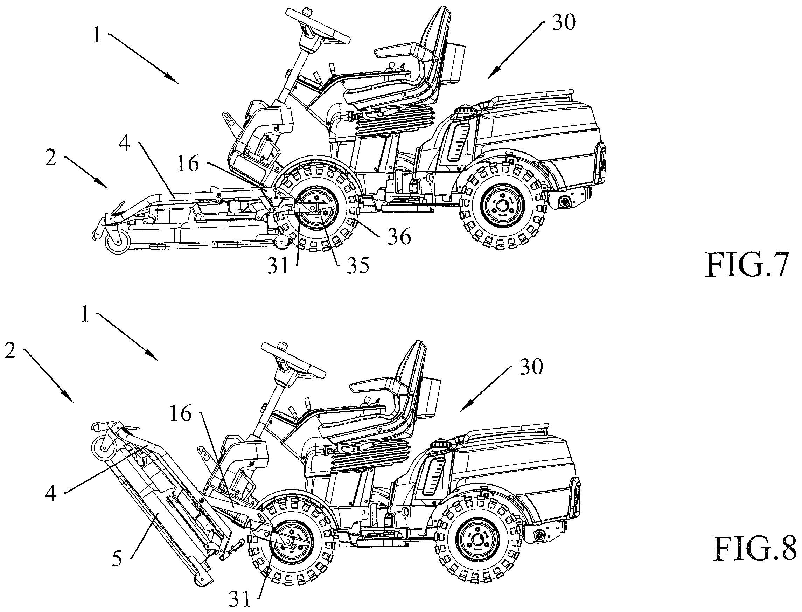

A lawnmower 1 comprises a tractor 30 and a cutting plate 2 (figures 7-10).

The cutting plate 2 is separably associated with front connections 31 of the tractor 30 by means of respective levers 3, 16.

When fixed to the respective connections 31, the levers 3, 16 are integral with the tractor 30.

Said levers 3, 16 are rotatably associated with a tubular element 4 of the plate 2.

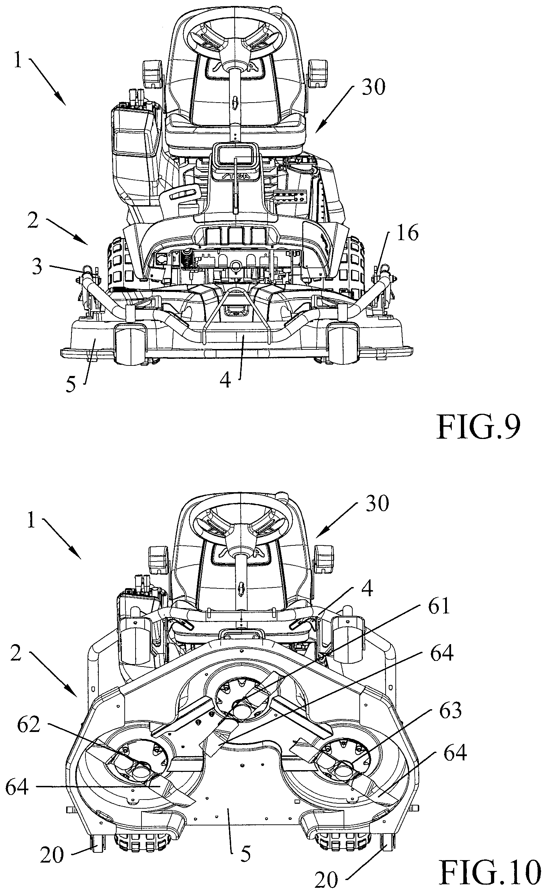

The plate 2 further comprises a bodywork 5 to which said tubular element 4 is fastened, and with which are rotatably associated three rotors 61-63 to which respective cutting blades 64 (figure 10) are inferiorly fixed.

The assembly of the bodywork 5 and the tubular element 4 forms a frame 50 for the cutting plate 2 of the lawnmower 1.

Said rotors 61-63 are connected to one another by means of a belt 7, and a rotor 61 provided with a toothed crown 65.

A driving belt 71 is associated with said rotor 61 connected to the motor of tractor 30.

A first end 81 of a wire 8 is fixed to a lever 3 the second end 82 of which is fixed to a body 9 which is selectively movable between a locking position and a rotor releasing position 61.

In the locked position, the body 9 meshes the toothed crown 62.

The body 9 is rotatably connected to a plate 10 fixed to the bodywork 5.

Said plate 10 comprises a first edge 101 to which is fastened a connection element 102 with which a portion of the wire 8 is slidably associated.

One end of a spring 11, the second end of which is fixed to the body 9, is fastened to a second edge 103 of the plate 10.

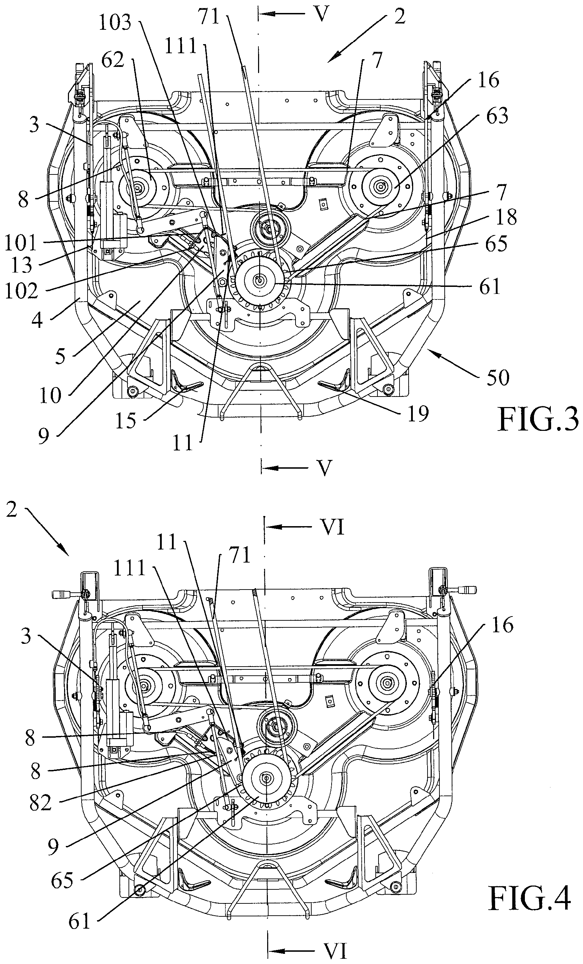

Said spring 11 serves to force the rotation of the body 9 in the locking direction of the rotor 61 (anti-clockwise looking at figures 3, 4).

Preferably, there is provided a second safety spring 111 connected to the plate 10 and the body 9 in different points with respect to said spring 11.

A bracket 41 is fixed to the tubular element 4 with which a portion of wire 8 is slidably associated, close to the connection of the lever 3.

At the connection of the tubular element 4, the lever 3 comprises one end 33 comprising a tooth 32 able to be coupled to a tooth 42 of a bracket 43 which is rotatably associated with the tubular element 4.

A spring 12 comprises a first end associated with the bracket 43 and a second end associated with the end 33 of the lever 3. Said spring 12 allows the sealing of the coupling between the teeth 32, 42 to be forced.

The rotation of the bracket 43 is controlled by a wire 13 connected to the bracket 43 by means of a spring 14.

Said wire 13 ends at a small lever 15.

The coupling of said teeth 32, 42 allows plate 2 to be kept in an inclined (raised) position for washing, which will become clearer later on.

The lever 16 is similar to said lever 3 but free from the connection for a locking/releasing wire, such as wire 8.

Like the lever 3, the lever 16 comprises an end with which a bracket 17 is associated and which is identical to the bracket 43, and a wire 18 for controlling said bracket 17 (by means of a spring 140), which ends in a small lever 19 having the same function as small lever 15.

The bracket 17 comprises a tooth 171 able to be coupled to a tooth 161 of the lever 16. A spring 120 similar to spring 12 connects bracket 17 to one end 330 of the lever 16.

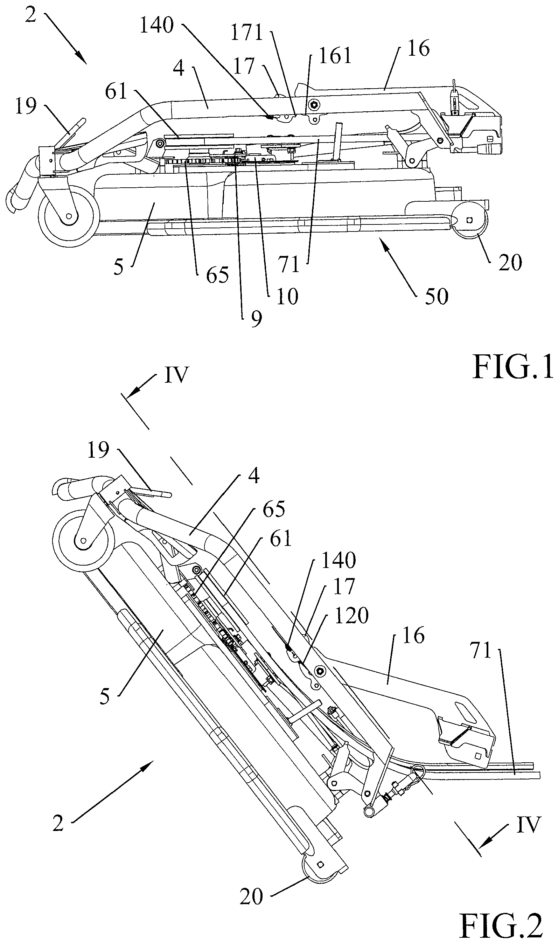

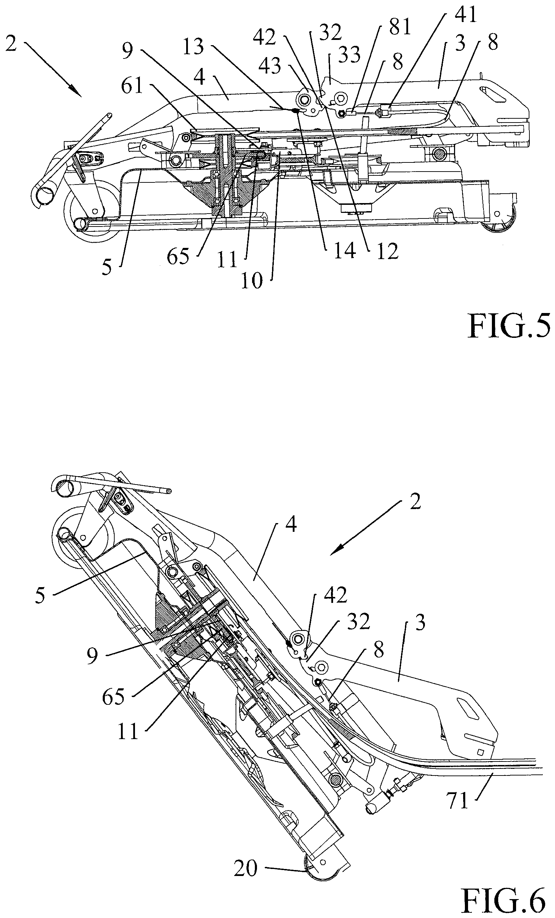

Operatively, in the working position in which plate 2 is lowered (figures 1, 3, 5, 9), the lever 3 is in a releasing position in which it pulls the wire 8, thus overcoming the force of the spring 11 while keeping the body 9 disengaged from the toothed crown 65 of the rotor 61.

In said configuration, the rotors 61-63 can rotate. The plate 2 is in a cutting position.

Note that the lever 16 is always kept parallel to the lever 3.

If the operator wants to wash the plate 2, he/she only needs to take the frame 4 and lift the plate 2, using the rear wheels 20 of plate 2 as a fulcrum.

The levers 3, 16 are constrained to the connections 31 of the tractor 30 stably resting on the ground.

As apparent from figures 7, 8, the connections 31 are rotatably associated with front rings 35 of the front wheels 36 of the tractor 30.

The levers 3, 16 rotate with respect to said front rings 35.

In turn, the frame 50, consisting of the bodywork 5 and the tubular element 4, which are integral with each other, rotates with respect to said levers 3, 16.

The rotation of the bodywork 5 with respect to the lever 3 loosens the pulling action on the wire 8, and therefore the spring 11 forces the body 9 to rotate towards the toothed wheel 65: after meshing, rotor 61 is locked.

The plate 2 is locked in an inclined position because the teeth 42, 171 of the brackets 43, 17 mesh the teeth 32, 162 of the levers 3, 16.

The plate 2 is ready for washing in safety.

After washing, in order to bring the plate 2 back into the lowered position, it is sufficient to pull the small levers 15, 19 in order to uncouple the teeth 32, 42 and the teeth 171, 162, respectively, and accompany the descent of the plate 2, which automatically determines the pulling of the wire 8 which uncouples the body 9 from the toothed wheel 65.

Advantageously, the weight of the plate 2 is used during the lowering step to overcome the force of the meshing of the body 9 with the toothed wheel 65.

The operator is thus able to move the cutting plate 2 between the working position and the washing position with two simple movements, lifting and lowering.

In the washing position, there is no risk for the operator because the rotors 61-63 are locked by a solid meshing connection.

Advantageously, the driving belt 71 does not need to be disassociated from rotor 61, nor from the tractor motor.

Alternatively, the plate 2 could be free from the tubular element 4, the levers 3, 16 being able to be directly and rotatably associated with the bodywork 5 by means of appropriate connection points. In such a case, the bodywork 5 corresponds to the frame 50.

Alternatively, the body 9 can be slidably associated with the plate 10, so that the locking/releasing movement is translational.

## Claims

1. Cutting plate (2) for tractor (30), comprising a frame (50) with which it is rotatably associated at least one rotor (61) driven by a driving belt (71) and to which a cutting blade (64) is fixed below (64), said cutting plate (2) further comprising at least one lever (3) rotatably associated with the frame (50) and separably associated with the tractor (30),
**characterized in that**
a first end (81) of a wire (8) is fixed to said lever (3), a second end (82) of the wire (8) is fixed to a body (9) associated with the frame (50), said body (9) being selectively movable between a locking position and a releasing position of the rotor (61), in said locked position the body (9) is reversibly associated with the rotor (61).

2. Cutting plate (2) according to claim 1, **characterized in that** said rotor (61) is provided with a toothed crown (65) which in the locking position is adapted to mesh the body (9).

3. Cutting plate (2) according to claim 2, **characterized in that** the body (9) is rotatably connected to the frame (50).

4. Cutting plate (2) according to claim 3, **characterized in that** the body (9) is rotatably connected to a plate (10) fixed to the frame (50), said plate (10) comprises a first edge (101) to which is fastened an element (102) with which a portion of the wire (8) is slidably associated, to a second edge (103) of the plate (10) being fastened an end of at least one spring (11, 111) whose second end is fixed to the body (9).

5. Cutting plate (2) according to any one of the preceding claims, **characterized in that** the frame (50) of the cutting plate (2) comprises a tubular element (4) fixed to a bodywork (5), the lever (3) being rotatably associated with said tubular element (4).

6. Cutting plate (2) according to claim 5, **characterized in that**
the lever (3) is provided with an end (33) comprising a tooth (32) adapted to be coupled with a tooth (42) of a bracket (43) rotatably associated with the tubular element (4),
a spring (12) comprises a first end associated with the bracket (43) and a second end associated with the end (33) of the lever (3),
the rotation of the bracket (43) is controlled by a wire (13) adapted to connect the bracket (43) and a small lever (15).

7. Cutting plate (2) according to claim 5 or 6, **characterized in that** a bracket (41) is fixed to the tubular element (4), a portion of the wire (8) is slidably associated with said bracket (41), near the connection of the lever (3).

8. Cutting plate (2) according to claim 7, **characterized in that** it is provided with a second bracket (17) rotatably associated with the tubular element (4), a wire (18) connecting said bracket (17) to a second small lever (19), the second bracket (17) providing a tooth (171) adapted to be coupled with a tooth (161) of a second lever (16), which is separably associated with the tractor (30) and rotatably associated with the frame (50).

## Patentansprüche

1. Schneidplatte (2) für eine Zugmaschine (30), wobei die Schneidplatte (2) einen Rahmen (50) aufweist, dem mindestens ein Rotor (61) drehbar zugeordnet ist, der von einem Antriebsriemen (71) angetrieben wird und an dem unten ein Schneidmesser (64) befestigt ist (64), wobei die Schneidplatte (2) ferner mindestens einen Hebel (3) aufweist, der dem Rahmen (50) drehbar zugeordnet ist und der Zugmaschine (50) trennbar zugeordnet ist,
**dadurch gekennzeichnet,**
**dass** ein erstes Ende (81) eines Drahts (8) an dem Hebel (3) festgelegt ist und ein zweites Ende (82) des Drahts (8) an einem Körper (9) festgelegt ist, der dem Rahmen (50) zugeordnet ist, wobei der Körper (9) zwischen einer Verriegelungsposition und einer Freigabeposition des Rotors (61) selektiv bewegbar ist, wobei der Körper (9) in der Verriegelungsposition dem Rotor (61) reversibel zugeordnet ist.

2. Schneidplatte (2) nach Anspruch 1,
**dadurch gekennzeichnet, dass** der Rotor (61) mit einer Zahnkrone (65) versehen ist, die in der Verriegelungsposition zum Eingriff mit dem Körper (9) ausgebildet ist.

3. Schneidplatte (2) nach Anspruch 2,
**dadurch gekennzeichnet, dass** der Körper (9) mit dem Rahmen (50) drehbar verbunden ist.

4. Schneidplatte (2) nach Anspruch 3,
**dadurch gekennzeichnet, dass** der Körper (9) mit einer an dem Rahmen (50) festgelegten Platte (10) drehbar verbunden ist, wobei die Platte (10) einen ersten Rand (101) aufweist, an dem ein Element (102) befestigt ist, dem ein Bereich des Drahts (8) verschiebbar zugeordnet ist, wobei an einem zweiten Rand (103) der Platte (10) ein Ende von mindestens einer Feder (11, 111) befestigt ist, deren zweites Ende an dem Körper (9) festgelegt ist.

5. Schneidplatte (2) nach einem der vorhergehenden Ansprüche,
**dadurch gekennzeichnet, dass** der Rahmen (50) der Schneidplatte (2) ein rohrförmiges Element (4) aufweist, das an einem Aufbau (5) festgelegt ist, wobei der Hebel (3) dem rohrförmigen Element (4) drehbar zugeordnet ist.

6. Schneidplatte (2) nach Anspruch 5,
**dadurch gekennzeichnet, dass** der Hebel (3) mit einem Ende (33) versehen ist, das einen Zahn (32) aufweist, der dazu ausgebildet ist, mit einem Zahn (42) einer dem rohrförmigen Element (4) drehbar zugeordneten Halterung (43) gekoppelt zu werden,
wobei eine Feder (12) ein der Halterung (43) zugeordnetes erstes Ende und ein dem Ende (33) des Hebels (3) zugeordnetes zweites Ende aufweist,
wobei die Rotation der Halterung (43) durch einen Draht (13) gesteuert wird, der dazu ausgebildet ist, die Halterung (43) und einen kleinen Hebel (15) zu verbinden.

7. Schneidplatte (2) nach Anspruch 5 oder 6,
**dadurch gekennzeichnet, dass** eine Halterung (41) an dem rohrförmigen Element (4) in der Nähe der Verbindungsstelle des Hebels (3) festgelegt ist, wobei ein Bereich des Drahts (8) der Halterung (41) verschiebbar zugeordnet ist.

8. Schneidplatte (2) nach Anspruch 7,
**dadurch gekennzeichnet, dass** sie mit einer zweiten Halterung (17) versehen ist, die dem rohrförmigen Element (4) drehbar zugeordnet ist, wobei ein Draht (18) die Halterung (17) mit einem zweiten kleinen Hebel (19) verbindet, wobei die zweite Halterung (17) einen Zahn (171) bereitstellt, der dazu ausgebildet ist, mit einem Zahn (161) eines zweiten Hebels (16) gekoppelt zu werden, der der Zugmaschine (30) trennbar zugeordnet ist und dem Rahmen (50) drehbar zugeordnet ist.

## Revendications

1. Plaque de coupe (2) pour un tracteur (30), comprenant un cadre (50) avec lequel est associé à rotation au moins un rotor (61) entraîné par une courroie d'entraînement (71) et auquel une lame de coupe (64) est fixée en dessous (64), ladite plaque de coupe (2) comprenant en outre au moins un levier (3) associé à rotation avec le cadre (50) et associé séparément avec le tracteur (30),
**caractérisée en ce que**
une première extrémité (81) d'un fil (8) est fixée audit levier (3), une seconde extrémité (82) du fil (8) est fixée à un corps (9) associé avec le cadre (50), ledit corps (9) étant déplaçable sélectivement entre une position de verrouillage et une position de libération du rotor (61), dans ladite position verrouillée le corps (9) est associé de manière réversible avec le rotor (61).

2. Plaque de coupe (2) selon la revendication 1, **caractérisée en ce que** ledit rotor (61) est muni d'une couronne dentée (65) qui, dans la position de verrouillage, est adaptée pour s'engrener avec le corps (9).

3. Plaque de coupe (2) selon la revendication 2, **caractérisée en ce que** le corps (9) est relié à rotation au cadre (50).

4. Plaque de coupe (2) selon la revendication 3, **caractérisée en ce que** le corps (9) est relié à rotation à une plaque (10) fixée au cadre (50), ladite plaque (10) comprend un premier bord (101) auquel est attaché un élément (102) avec lequel une partie du fil (8) est associée à coulissement, à un second bord (103) de la plaque (10) étant attachée une extrémité d'au moins un ressort (11, 111) dont la seconde extrémité est fixée au corps (9).

5. Plaque de coupe (2) selon l'une quelconque des revendications précédentes, **caractérisée en ce que** le cadre (50) de la plaque de coupe (2) comprend un élément tubulaire (4) fixé à une carrosserie (5), le levier (3) étant associé à rotation avec ledit élément tubulaire (4).

6. Plaque de coupe (2) selon la revendication 5, **caractérisée en ce que** le levier (3) est muni d'une extrémité (33) comprenant une dent (32) adaptée pour être couplée avec une dent (42) d'un support (43) associé à rotation avec l'élément tubulaire (4),
un ressort (12) comprend une première extrémité associée avec le support (43) et une seconde extrémité associée avec l'extrémité (33) du levier (3),
la rotation du support (43) est commandée par un fil (13) adapté pour relier le support (43) et un petit levier (15).

7. Plaque de coupe (2) selon la revendication 5 ou 6, **caractérisée en ce qu'**un support (41) est fixé à l'élément tubulaire (4), une partie du fil (8) est associée à coulissement avec ledit support (41), à proximité de la liaison du levier (3).

8. Plaque de coupe (2) selon la revendication 7, **caractérisée en ce qu'**elle est munie d'un second support (17) associé à rotation avec l'élément tubulaire (4), un fil (18) reliant ledit support (17) à un second petit levier (19), le second support (17) présentant une dent (171) adaptée pour être couplée avec une dent (161) d'un second levier (16), qui est associé séparément avec le tracteur (30) et associé à rotation avec le cadre (50).
